# EUROPEAN PATENT APPLICATION

(11) **EP 3 404 532 A1**
(43) Date of publication of application: **21.11.2018**
(21) Application number: 18172280.2
(22) Date of filing: 15.05.2018
(51) Int. Cl.: G06F 8/65, G07C 5/00

(54) **METHOD AND APPARATUS FOR UPDATING A PROGRAM**

(30) Priority: 18.05.2017 CN 201710352940
(71) Applicant: Contemporary Amperex Technology Co., Limited, Jiaocheng District Ningde City, Fujian 352100 (CN)
(72) Inventor: CHEN, Qifeng, Ningde City, Fujian 352100 (CN)
(74) Representative: Boult Wade Tennant LLP

(57) **Abstract**

The present invention provides a method and apparatus for updating a program, which relates to the field of electronic and electrical technologies. The method for updating a program includes: downloading (101) an update program to a program download area; erasing (102) a program that has been in a program executing area; writing (102) the update program in the program download area into the program executing area; and executing (103) the written update program in the program executing area. With the method and apparatus for updating a program of embodiments of the present invention, update efficiency of a program in an electronic control unit can be improved.

## Description

### TECHINICAL FIELD

The present invention relates to the field of electronic and electrical technologies, and more particularly to a method and apparatus for updating a program.

### BACKFGROUND

Electronic control unit (ECU) is widely used in vehicles. The electronic control unit can perform operations in accordance with acquired parameter information in conjunction with a program stored in the electronic control unit. The results of the operation are transformed into a control signal such that the electronic control unit can perform overall control of the vehicle.

In order to meet the increasing demands of users, the program stored in the electronic control unit needs to be updated to meet the requirements of users. At present, it requires a professional operator to engage in the process of updating the program in the electronic control unit. Specifically, the vehicle must be stopped, and then the professional operator carries a terminal device for updating the program to the vehicle and connects the terminal device with the vehicle via an upgrade interface. The program stored in the electronic control unit of the vehicle is erased and an update program in the terminal device is then downloaded to the electronic control unit of the vehicle. After the update program in the terminal device is completely downloaded to the electronic control unit, the vehicle is started to perform the updated program in the electronic control unit.

. The procedure for updating the program in the electronic control unit requires the vehicle to be stopped for 5 to 10 minutes, so efficiency of updating the program in the electronic control unit is low.

### SUMMARY

The embodiments of the present invention provide a method and apparatus for updating a program, with which the update efficiency of a program in an electronic control unit.

In one aspect, the embodiments of the present invention provide a method for updating a program. The method includes: downloading an update program to a program download area; erasing a program that has been in a program executing area; writing the update program in the program download area into the program executing area; and executing the written update program in the program executing area.

In another aspect, the embodiments of the present invention provide an apparatus for updating a program. The apparatus includes: a program download module configured to download an update program to a program download area; an update writing module configured to erase a program that has been in a program executing area and write the update program in the program download area into the program executing area; a program executing module configured to execute the written update program in the program executing area.

According to the method and apparatus for updating a program provide in the embodiments of the present invention, a program download area and a program executing area are provided. The program download area is used for download of an update program. The program executing area is used for executing of an update program. As compared with the traditional method in which it requires a vehicle to stop in order to perform update of a program and the update program is executed after it has been downloaded, the embodiments of the present invention has two separate functions, one for downloading of a program and another for executing of a program, such that the original program can be still being executed in the program executing area while downloading the update program in the program download area. In the embodiments of the present invention, it does not require the vehicle to stop during downloading of the update program, and the vehicle stops only when the program in the program executing area is being erased and the update program in the program download area is being written to the program executing area. In this way, the time period required to stop the vehicle during updating of a program can be reduced, and thereby efficiency of updating a program can be improved.

### BRIEF DESCRIPTION OF THE DRAWINGS

The present invention will be better understood from the following descriptions of specific embodiments of the invention taken in conjunction with the accompanying drawings, in which like or similar reference numerals refer to like or similar features.
Fig. 1 is a schematic diagram of a program download area and a program executing area in an embodiment of the present invention;
Fig. 2 is a flow chart of a method for updating a program in an embodiment of the present invention;
Fig. 3 is a flow chart of a method for updating the program in another embodiment of the present invention;
Fig. 4 is a flow chart of a method for updating a program in yet another embodiment of the present invention;
Fig. 5 is a schematic structural view of an apparatus for updating a program according to an embodiment of the present invention;
Fig. 6 is a schematic structural view of an apparatus for updating a program according to another embodiment of the present invention; and
Fig. 7 is a schematic structural view of an apparatus for updating a program according to yet another embodiment of the present invention.

### DETAILED DESCRIPTION

The features and exemplary embodiments of the various aspects of the present invention will be described in detail below. In the following detailed descriptions, numerous specific details are set forth in order to provide a thorough understanding of the present invention. It will be apparent, however, to one skilled in the art that the present invention may be practiced without the need for some of the details in these specific details. The following descriptions of the embodiments are merely for the purpose of providing a better understanding of the present invention by showing examples of the present invention. The present invention is by no means limited to any of the specific configurations and algorithms set forth below, but is intended to cover any modifications, substitutions, and improvements of elements, components and algorithms without departing from the scope of the invention. In the drawings and the following descriptions, well-known structures and techniques are not shown in order to avoid unnecessarily obscuring the present invention.

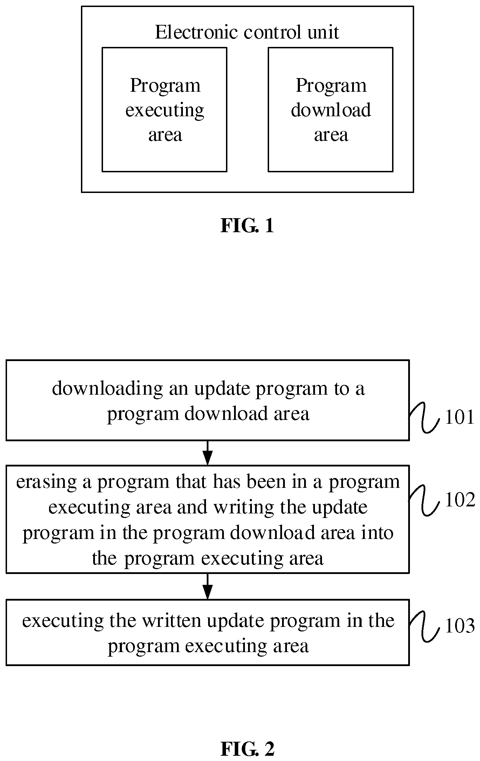

The embodiments of the present invention provide a method and apparatus for updating a program, which can be applied for program updating. For example, it can be applied for updating a program in a vehicle. A program download area and a program executing area can be provided in a device such as a microcontroller in an electronic control unit of a vehicle. Fig. 1 is a schematic diagram of a program download area and a program executing area in an embodiment of the present invention. The program download area is configured to download a program, and the program executing area is configured to execute a program. When the vehicle is in a running state (i.e., driven state), the program in the program executing area is being executed. In the embodiments of the present invention, the program download area and the program executing area interact with each other such that Read-While-Writing (RWW) can be realized. Thus, it is possible to realize downloading of the update program during running of the vehicle, and the vehicle only needs to stop in order to erase the program in the program executing area and to write the update program therein, thereby the entire process for updating the program of the electronic control unit can be speeded up.

Fig. 2 is a flowchart of a method for updating a program according to an embodiment of the present invention. As shown in Fig. 2, the method for updating a program includes the steps 101 to 103.

In step 101, an update program is downloaded to a program download area.

An update program has been prepared well. The update program is downloaded to the program download area. The program download area and the program executing area are two separate areas. The program download area and the program operation area can realize their own functions separately. Downloading the update program into the program download area when the vehicle is running does not affect the program which has not been updated in the program executing area, so the vehicle is still able to run normally and the vehicle's functions are still able to operate normally.

In step 102, the program in the program executing area is erased and the update program in the program download area is written into the program executing area.

After the update program has been downloaded to the program download area, the original program that has been in the program executing area can be erased. The program download area transfers the downloaded update program to the program executing area such that the update program in the program download area is written into the program executing area. In an example, the Bootloader in a random access memory (RAM) of the electronic control unit operates to implement initialization, and then the program in the program executing area is erased, and the update program in the program download area is written into the program executing area.

In step 103, the written update program in the program executing area is executed.

The update program in the program executing area is executed to enable the vehicle to run the update program.

The embodiments of the present invention provide a method for updating a program in which the program download area and the program executing area are provided. The update program can be downloaded to the program download area. Then, the program in the program executing area is erased, and the update program in the program download area is written into the program executing area. The update program in the program executing area is then executed. As compared with the traditional method in which it requires a vehicle to stop in order to perform update of a program and the update program is executed after it has been downloaded, the embodiments of the present invention has two separate functions, one for downloading of a program and another for executing of a program, such that the original program can be still being executed in the program executing area while downloading the update program in the program download area. In the embodiments of the present invention, it does not require the vehicle to stop during downloading of the update program, and the vehicle stops only when the program in the program executing area is being erased and the update program in the program download area is being written to the program executing area. In this way, the time period required to stop the vehicle during updating of a program can be reduced, and thereby efficiency of updating a program can be improved.

Hereinafter, a specific example will be described. Assume that the update program occupies a space of 1MB. In the traditional method, the vehicle needs to be stopped for about 5 minutes to 10 minutes for updating of the program (including downloading of an update program, erasing of original program, and writing of the update program).

In the embodiments of the present invention, the vehicle needs to be stopped for about 15 seconds for updating of the program (the vehicle only stops for erasing of the original program and writing of the update program). It can be seen that as compared with the traditional method, the embodiments of the present invention greatly shortens the time period in which the vehicle is in a stopped state, and thus efficiency of updating the program of the electronic control unit can be greatly improved.

In an example, the above described step 101 may be specifically implemented by downloading the update program to the program download area during the program is being executed in the program executing area.

By preparing an update program and downloading the update program to the program download area during the program is being executed in the program executing area, it allows downloading of the update program and executing of the existing program to be performed in parallel, and thereby a part of time period required for updating the program can be saved, and thus efficiency of updating the program can be improved.

In another example, the above described step 101 may be specifically implemented by downloading the update program to the program download area by using a Unified Diagnostic Services (UDS).

For example, in the case that the vehicle is equipped with a vehicle terminal, the vehicle terminal acquires an update program from outside, and the vehicle terminal can implement controls through the UDS 0x28 service (that is, a communication control service within the unified diagnostic service) to enable communication between the vehicle terminal and the electronic control unit. The vehicle terminal can prepare the update program through the unified diagnostic service and download the update program to the program download area. In the process of updating the program, non-diagnostic session can be prohibited and a silent mode is initiated. In the case that there are multiple electronic control units in the vehicle, it is necessary to maintain the unified diagnostic service session between the vehicle terminal and the electronic control units to be upgraded until the update program is completely downloaded to the program download area in the respective electronic control units.

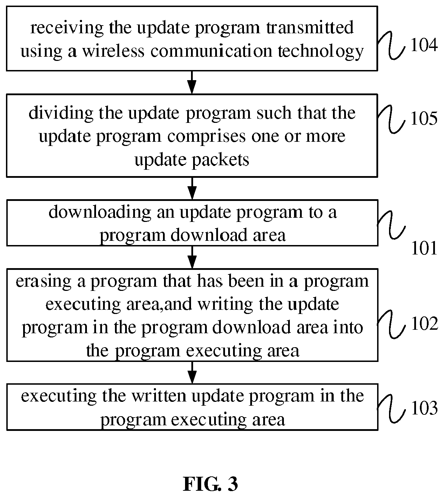

Fig. 3 is a flowchart of a method for updating a program in another embodiment of the present invention. Fig. 3 differs from Fig. 2 in that method for updating a program may further include the steps 104 and 105.

In step 104, the update program transmitted using a wireless communication technology is received.

In an example, a vehicle terminal is provided in a vehicle, and the vehicle terminal has a wireless communication function such that an update program transmitted from an update center can be received by using a wireless communication technology. The wireless communication technology may include Bluetooth, WiFi (Wireless Fidelity), ZigBee, 2G/3G/4G data traffic communication, etc. The present invention is not limited thereto.

In the vehicle, the vehicle terminal is communicatively connected with the electronic control unit. For example, the vehicle terminal and the electronic control unit may be connected via a Controller Area Network (CAN) bus. Specifically, they can be connected via CANH (CAN bus high level interface) and CANL (CAN bus low level interface). The vehicle terminal receives the update program from the update center and downloads and transmits the update program to the program download area in the electronic control unit through the unified diagnostic service protocol.

In another example, a wireless communication module may also be provided and the update program transmitted from the update center may be received through the wireless communication module. The wireless communication module may be a Bluetooth module, a WiFi module, a ZigBee module, a data traffic module, etc.. The present invention is not limited thereto.

In step 105, the update program is divided such that the update program comprises one or more update data packets.

The update program is divided into one or more update packets, and each update packet may be allocated with an address in the program download areas according to the order and size of the update packets. According to the allocated address, the update packets are downloaded and stored in the program download area. In an example, division of the update program may be divided by the vehicle terminal in the vehicle.

In the embodiments of the present invention, the update program can be transmitted using a wireless communication technology, so there is no need for a professional operator to carry a terminal equipment to the vehicle site, and there is no need for additional wirings during the program is updated. Moreover, in the case that there are a number of vehicles to be updated and widely distributed, since a wireless communication technology is used, the programs in the vehicles can be wirelessly updated, and thus management for these updates are more convenient and there is no need to find each vehicle of which the program needs to be updated. Therefore, the time and efforts required to update programs of a large number of vehicles can be reduced.

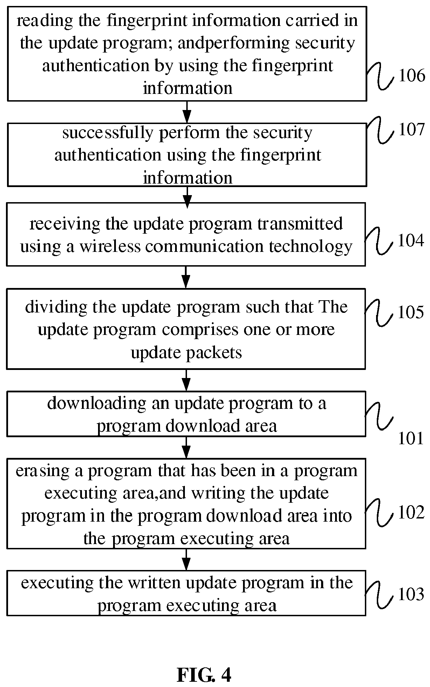

Fig. 4 is a flowchart of a method for updating a program according to still another embodiment of the present invention. Fig. 4 differs from Fig. 3 in that the method for updating a program may further include the steps 106 and 107.

In step 106, fingerprint information carried in an update program is read and security authentication is performed by using the fingerprint information.

An update program may carry fingerprint information. The fingerprint information is identity of the update program. The fingerprint information can be used to perform security authentication, so as to ensure that an update program matching the current update process is to be received.

For example, the vehicle is equipped with a vehicle terminal, and the vehicle terminal can read the fingerprint information carried in the update program via the UDS 0x22 service (i.e., the read memory service in the unified diagnostic service).

In step 107, the security authentication is successfully performed using the fingerprint information.

In the case that the security authentication using the fingerprint information is successful, it indicates that the update program matches the current update process and thus the update program should be received. The fingerprint information can also be written into the electronic control unit. For example, in the case that the security authentication using the fingerprint information is successful, the fingerprint information can be written into the electronic control unit by using UDS 0x2E service (i.e., the write memory service in the unified diagnostic service).

In the case that the security authentication using the fingerprint information fails, it indicates that the update program does not match the current update process and thus the update program should be refused.

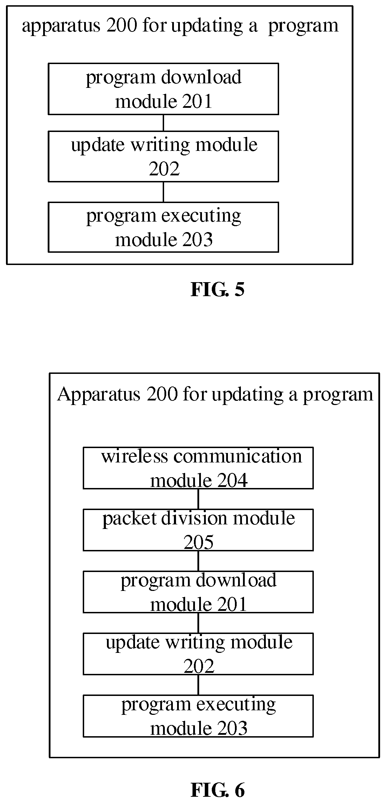

Fig. 5 is a schematic structural view of an apparatus 200 for updating a program according to an embodiment of the present invention. As shown in Fig. 5, the apparatus 200 for updating a program includes a program download module 201, an update writing module 202, and a program executing module 203.

The program download module 201 is configured to download an update program to a program download area.

The update writing module 202 is configured to erase a program that has been in a program executing area and write the update program in the program download area into the program executing area.

The program executing module 203 is configured to execute the written update program in the program executing area.

The embodiments of the present invention provide an apparatus 200 for updating a program in which the program download module 201 prepares an update program and download the update program to the program download area, the update writing module 202 erases the program that has been in the program executing area and write the update program in the program download area into the program executing area, and the program executing module 203 executes the written update program in the program executing area. As compared with the traditional method in which it requires a vehicle to stop in order to perform update of a program and the update program is executed after it has been downloaded, the embodiments of the present invention has two separate functions, one for downloading of a program and another for executing of a program, such that the original program can be still being executed in the program executing area while downloading the update program in the program download area. In the embodiments of the present invention, it does not require the vehicle to stop during downloading of the update program, and the vehicle stops only when the program in the program executing area is being erased and the update program in the program download area is being written to the program executing area. In this way, the time period required to stop the vehicle during updating of a program can be reduced, and thereby efficiency of updating a program can be improved.

In one example, the above described program download module 201 may be specifically configured to download the update program to the program download area during the program is being executed in the program executing area.

In another example, the above described program download module 201 may be specifically configured to download the update program to the program download area by using a unified diagnostic service.

Fig. 6 is a schematic structural view of an apparatus 200 for updating a program according to another embodiment of the present invention. Fig. 6 differs from Fig. 5 in that the apparatus 200 for updating a program may further include a wireless communication module 204 and a packet division module 205.

The wireless communication module 204 may be configured to receive an update program transmitted using a wireless communication technology.

The packet division module 205 may be configured to divide the update program such that the update program comprises one or more update packets.

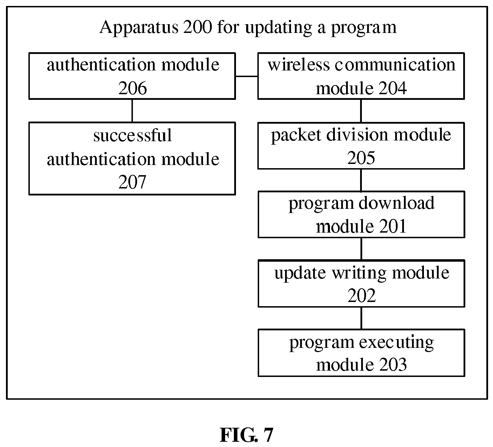

Fig. 7 is a schematic structural view of an apparatus 200 for updating a program according to still another embodiment of the present invention. Fig. 7 differs from Fig. 6 in that the apparatus 200 for updating a program may further include an authentication module 206 and a successful authentication module 207.

The authentication module 206 may be configured to read fingerprint information carried in an update program and perform security authentication by using the fingerprint information in the case that the update program carries the fingerprint information.

The successful authentication module 207 may be configured to successfully perform the security authenticate using the fingerprint information.

It is to be understood that the various embodiments in this specification are described in a progressive manner and that the same or similar parts may be referred to each other in various embodiments, each of which is different from other embodiments. For apparatus embodiments, reference may be made to the descriptions of the method embodiments. The present invention is not limited to the specific steps and structures described above and shown in the drawings. It will be apparent to those skilled in the art that various changes, modifications, additions may be made therein or the order of the steps may be varied without departing from the scope of the present invention. Also, for the sake of brevity, a detailed description of the known method technique is omitted here.

The functional blocks shown in the block diagram described above may be implemented as hardware, software, firmware, or a combination thereof. When implemented in hardware, it may be, for example, electronic circuits, application specific integrated circuits (ASICs), suitable firmware, plug-ins, function cards, and the like. When implemented in software, the elements of the present invention are programs or code segments that are used to perform the desired tasks. The programs or code segments may be stored in a machine-readable medium or transmitted over a transmission medium or a communication link through a data signal carried in the carrier. The "machine-readable medium" may include any medium capable of storing or transmitting information.

## Claims

1. A method for updating a program, **characterized by** comprising:
downloading (101) an update program to a program download area;
erasing (102) a program that has been in a program executing area;
writing (102) the update program in the program download area into the program executing area; and
executing (103) the written update program in the program executing area.

2. The method for updating a program according to claim 1, wherein said downloading the update program to the program download area comprises:
downloading the update program to the program download area during the program is being executed in the program executing area.

3. The method for updating a program according to any one of the preceding claims 1 to 2, further comprises:
Dividing (105) the update program such that the update program comprises one or more update data packets before the update program is downloaded to the program download area.

4. The method for updating a program according to any one of the preceding claims 1 to 3, further comprises:
receiving (104) the update program transmitted using a wireless communication technology before the update program is downloaded to the program download area.

5. The method for updating a program according to any one of the preceding claims 1 to 4, wherein said downloading the update program to the program download area comprises:
downloading the update program to the program download area by using a unified diagnostic service.

6. The method for updating a program according to claim 4, wherein the update program carries fingerprint information, and before said receiving the update program transmitted using the wireless communication technology, the method further comprises:
reading (106) the fingerprint information carried in the update program;
performing (106) security authentication by using the fingerprint information; and
successfully perform (107) the security authentication using the fingerprint information.

7. A apparatus for updating a program, **characterized by** comprising:
a program download module (201) configured to download an update program to a program download area;
an update writing module (202) configured to erase a program that has been in a program executing area and write the update program in the program download area into the program executing area;
a program executing module (203) configured to execute the written update program in the program executing area.

8. The apparatus for updating a program according to claim 7, wherein the program download module (201) is configured to download the update program to the program download area during the program is being executed in the program executing area.

9. The apparatus for updating a program according to any one of the preceding claims 7 to 8, further comprising:
a data packet division module (205) configured to divide the update program such that the update program comprises one or more update data packets.

10. The apparatus for updating a program according to any one of the preceding claims 7 to 9, further comprising:
a wireless communication module (204) configured to receive the update program transmitted using a wireless communication technology.

11. The apparatus for updating a program according to any one of the preceding claims 7 to 10, wherein the program download module (201) is configured to download the update program to the program download area by using a unified diagnostic service.

12. The apparatus for updating a program according to claim 10, wherein the update program carries fingerprint information, wherein the apparatus further comprises:
an authentication module (206) configured to read the fingerprint information carried in the update program and perform security authentication by using the fingerprint information;
a successful authentication module (207) configured to successfully perform the security authenticate using the fingerprint information.

13. A computer program product having instructions, which when executed by a device, cause the device to perform the method according to any one of the claims 1-6.
